# EUROPÄISCHE PATENTANMELDUNG

(11) **EP 1 388 803 A2**
(43) Veröffentlichungstag der Anmeldung: **11.02.2004**
(21) Anmeldenummer: 03102279.1
(22) Anmeldetag: 24.07.2003
(51) Int. Cl.: G06K 9/00

(54) **Fingerprintsensor mit einem Einschaltsensor**

(30) Priorität: 08.08.2002 DE 10236472
(71) Anmelder: SIEMENS AKTIENGESELLSCHAFT, 80333 München (DE)
(72) Erfinder: Abraham, Fritz, 8052 Graz (AT); Pfeiffer, Christoph, 8181, St. Rupprecht/Raab (AT); Radkohl, Günter, 8093, St. Peter am Ottersbach (AT)

(57) **Zusammenfassung**

Die Erfindung betrifft einen Fingerprintsensor (FP). Erfindungsgemäß ist ein Einschaltsensor (ES) vorgesehen zur Erfassung eines sich dem Fingerprintsensor (FP) nähernden oder eines aufliegenden Fingers.

## Beschreibung

Die Erfindung betrifft einen Fingerprintsensor.

Solche Fingerprintsensoren werden zur Erfassung der Fingerlinien verwendet und sind beispielsweise bei Zugangskontrollsystemen sowie bei Datenverarbeitungs- und Kommunikationsendgeräten einsetzbar.

Zur Aktivierung des Fingerprintsensors kann eine zusätzliche Starttaste vorgesehen sein, oder der Fingerprintsensor selbst kann als drucksensitiver Sensor ausgebildet sein. Durch einen Druck auf diesen Sensor wird der Erfassungsvorgang, d.h. die Abnahme beziehungsweise das Enrollment der Fingerlinien eingeleitet. Bei einem solchen drucksensitiven Fingerprintsensor ergeben sich Probleme im Zusammenhang mit mechanischem Aufbau und weiter mit der Auslösung.

Der Erfindung liegt die Aufgabe zugrunde, die Bedienfreundlichkeit eines Fingerprintsensors zu erhöhen.

Diese Aufgabe wird erfindungsgemäß durch die im Patentanspruch angegebenen Merkmale gelöst.

Im Folgenden wird die Erfindung anhand eines in der Zeichnung dargestellten Ausführungsbeispieles näher beschrieben.

Gemäß der Erfindung wird die Annäherung eines Fingers berührungslos detektiert.

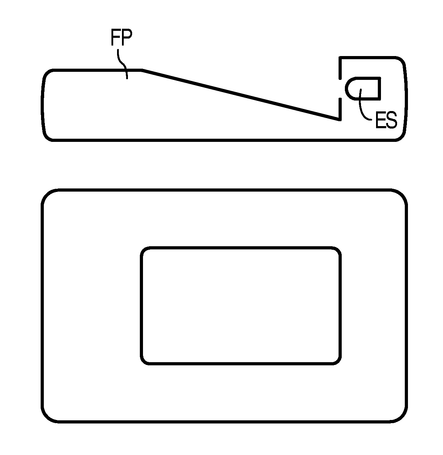

In Figur 1 ist im Schnitt und in Draufsicht ein solcher Fingerprintsensor FP dargestellt. Zu Erfassung eines sich dem Sensor FP nähernden oder eines aufliegenden Fingers ist ein Einschaltsensor ES vorgesehen.

Der Einschaltsensor ES ist beispielsweise durch einen Infrarotsensor realisiert. Hierdurch wird die Infrarotstrahlung eines natürlichen Fingers detektiert. Der Einschaltsensor ES ist beispielsweise in direkter Nähe zum Fingerprintsensor FP angeordnet, so dass er den sich nähernden Finger oder einen auf dem Sensor aufliegenden Finger aufgrund der Infratrotstrahlung erfasst.

Der Einschaltsensor ES kann auch durch einen Ultraschallsensor realisiert sein, der den Finger auf Grund seiner bloßen Anwesenheit detektiert.

Durch den sich nähernden beziehungsweise aufliegenden Finger wird der Fingerdrucksensor FP aktiviert und der Bildlesevorgang eingeleitet.

Bei einer entsprechenden Ausgestaltung des Einschaltsensors ES, beispielsweise bei einem Infrarotsensor, kann dieser Sensor auch zur Lebenderkennung verwendet werden.

## Patentansprüche

1. Fingerprintsensor (FP)
**gekennzeichnet durch**
einen Einschaltsensor (ES) zur Erfassung eines sich dem Fingerprintsensor (FP) nähernden oder eines aufliegenden Fingers.
